# EUROPEAN PATENT APPLICATION

(11) **EP 2 371 777 A1**
(43) Date of publication of application: **05.10.2011**
(21) Application number: 10003461.0
(22) Date of filing: 30.03.2010
(51) Int. Cl.: C03C 17/02, C03C 17/00

(54) **Producing of flat glass with anti-reflection properties**

(71) Applicant: Linde AG, 80331 München (DE)
(72) Inventor: Carney, Stephen, 81245 München (DE); Reiss, Werner, 83075 Bad Feilnbach (DE)
(74) Representative: Kasseckert, Rainer

(57) **Abstract**

The invention relates to a method for producing flatglass comprising the steps of:
- melting a glass composition to form a glass melt,
- forming the glass melt to flat glass in form of a glass ribbon,
- conveying the flat glass into an annealing chamber for annealing the flat glass,

wherein before or during or directly after said annealing glass nano particles are deposited on the hot surface of the glass ribbon. This is an in-line production process which produces flat glass with a micro- or nanostructured surface. Such a flat glass provides long lasting self cleaning and anti reflecting characteristics and is particularly suitable for solar cells.

## Description

The invention relates to a method for producing flat glass.

Flat glass manufacturing can be considered to include rolled glass, patterned glass, drawn glass, figured glass and float glass manufacturing.

The basic process for the production of flat glass is described in the patent of L. A. B. Pilkington et al. US 2,911,759 according to which a flat glass is produced in ribbon form. A ribbon is formed of molten glass. The ribbon is cooled to an extent sufficient to make it stiff enough to stabilise its dimensions and thereafter the ribbon is directed onto a bath of molten tin. The ribbon is floated and continuously advanced on the tin bath, wherein the surface of the ribbon is softened and then progressively and sufficiently cooled before leaving the bath.

There are numerous of improvements of this basic process. Particularly, there are different processes for finishing flat glass. In US 3,284,181 a method is disclosed according to which a cooled and washed flat glass ribbon is treated with an aqueous acid solution of a fluorine containing compound for removing a surface layer of the glass ribbon by means of etching. It has been found that tin or tin compounds are present in the flat surface and this can cause an iridescent layer.

All known solutions for removing tin impurities from the glass surface take place as finishing steps.

Furthermore, from J. Yoo et al.; "Black surface structures for crystalline silicon solar cells", Materials Science and Engineering B 159-160 (2009) 333-337 it is known that the efficiency of solar cells can be improved by a front surface texturing by wet or dry etching. With random reactive ion etching (RIE) techniques an anti reflection coating is achieved on the surface of solar cells. A SF₆/O₂ RIE process is used for texturing of silicone. In SF₆/O₂ plasma etching, SF₆ gas is used to intentionally form F* radicals to etch the silicone by producing volatile SiF₄. Also oxygen produces O* radicals for passivation of the silicone sidewall surface with SiₓO_{y}F_{z} which helps to control etched profiles.

All known solutions for modifying the surface are performed off-line on individual pieces of flat glass or other materials.

Such an off-line modifying process requires packaging of the glass for delivery to the application unit, transportation of the glass to the application unit and additional process energy for modifying the glass. All in all additional costs arise.

The object of the present invention is to provide a method for producing glass with an anti-reflective surface structure with an extended durability in comparison to the known anti reflective coated glass.

The object is solved by a method according to claim 1. Advantageous embodiments of the invention are characterized in the subclaims.

The method for producing flat glass according to the present invention comprises the steps of:
- melting a glass composition to form a glass melt,
- forming the glass melt to flat glass in form of a glass ribbon,
- conveying the flat glass into an annealing chamber for annealing the flat glass,
wherein before or during or directly after said annealing nano particles are fused to the hot surface of the glass ribbon.

The glass ribbon is before or during or directly after said annealing so hot that glass nano particles which are deposited on the glass ribbon melt are fused with the glass ribbon to form a monolithic body. Glass or silicon dioxide nano particles exhibit a considerably lower melting point compared to bulk glass. Thus the temperature of the glass ribbon is sufficient to fuse the glass nano particles with the glass ribbon. Thereby a nanostructured surface is achieved which has anti reflecting properties.

A major advantage in comparison to known glass coatings is that the nanostructured surface is part of a monolithic body of the glass ribbon. Therefore, the durability of a textured surface on a glass pane made of such a glass ribbon with a nanostructured surface is much longer than the one of glass panes having coatings with similar functions.

Furthermore, with the nanostructured surface it is possible to achieve anti-reflecting properties.

Preferably, the glass melt is formed to flat glass in form of a continuous ribbon and the nano particles are applied to the surface of the continuous glass ribbon. In a particular preferred embodiment the nano particles are applied to float glass. The invented process can be integrated into the glass manufacturing process and can be carried out in-line. Creating of an anti-reflective surface structure can be achieved in-line and in particular before the flat glass has been cut, edged and/or drilled.

The application of the nano particles is preferably carried out after the hot glass melt has been formed into a glass ribbon which is done either by floating or by rolling. On the other hand, the nano particles are applied to the glass still within the glass manufacturing line, that is before the glass ribbon is cut into the desired pieces. The invention preferably utilizes the temperature and condition of the flat glass during the annealing step, i.e. between the end of the forming step and the glass ribbon cutting step at the end of the glass manufacturing line.

The nanostructured surface is preferably embodied in such a way that the texture formed by the nano particles has a height of 50 nm to 400 nm and preferably 100 nm to 300 nm.

As the deposition of the nano particles is carried out before or during or directly after the annealing of the flat glass the temperature of the flat glass exiting the tin bath or exiting an annealing lehr is sufficient high to fuse the glass nano particles. It is not necessary to additionally heat the flat glass. Thus, energy savings can be achieved.

During the deposition of the glass nano particles the temperature of the glass ribbon is preferably between 400 °C and 50 °C above the glass transition temperature. These temperatures are substantially lower than the melting temperature of bulk glass but sufficient to fuse the glass nano particles onto the glass ribbon.

The glass transition temperature is the temperature at which liquid glass changes to an amorphous structure. Different operational definitions of the glass transition temperature exist. In this application the glass transition temperature shall mean the transition temperature based on a measurement of the energy release on heating in differential scanning calorimetry (DSC). The glass transition temperature depends on the cooling rate, molecular weight distribution and can be influenced by additives.

The glass nano particles can be deposited on the glass ribbon by means of a stream of hot air or of inert gas. The temperature of the air or inert gas can be higher than the temperature of the glass ribbon. Appropriate temperatures of the air or inert gas stream lie in the range of 400°C and 700°C and preferably in the range of 500°C to 600°C. The appropriate temperature depends very much on the individual glass composition and the type of nano particles. A hot air stream can soften the surface of the glass ribbon and supports the fusion of the glass nano particles onto the glass ribbon. However, the air or inert gas stream shall not melt the surface of the glass ribbon as this would flatten the surface of the glass ribbon and destroy the intended structure.

Preferably the nanostructured surface of the flat glass is at least once toughened by a chemical process applied below the softening temperature of the flat glass and by cooling the flat glass in the annealing process. The toughening may be carried out before or after the deposition of the nano particles of the flat glass. Within this application the terms "toughening", "tempering" and "hardening" are used as synonyms if not explicitly otherwise stated. The nanostructure weakens the flat glass, wherein the recesses form starting points for cracks. To counteract these cracks the nanostructured surface can be toughened. Preferably a first toughening step is carried out in-line of the production process and the final toughening or tempering can be made after cutting, etching and drilling. The chemical process for toughening the flat glass is based on an ion exchange of the sodium ions with larger potassium ions. A lower sodium ion concentration combined with a glass chemistry in the weight percent ranges SiO₂ 63% - 73%, Al₂O₃ 3% - 8%, MgO 0.5% - 6%, CaO 4% - 12%, K₂0 0.1% - 4%, Na₂0 12% - 15%, LiO₂ 0.1 % - 1.0 % that favors ion exchange reduces the chemical reaction at the surface that causes bloom and lower light transmission and if a dielectric layer is provided on the glass surface then a lower sodium ion concentration reduces the incident of migration of sodium ions from the glass through the dielectric layer. These two effects are particularly advantageous if the flat glass is used as a substrate for a solar module.

Furthermore, the present invention relates to a chemically modified glass pane which is made of flat glass and has a nanostructured surface, wherein the nanostructured surface is formed in the surface of the body of the glass pane which has a substantially uniform composition.

Ordinary glass panes having a nanostructure have a coating in which the structure is formed. The coating has a different composition than the residual body of the glass pane. The glass pane according to the present invention has both in the surface portion of the body which is adjacent to the structured surface as well as in the central portion of the body of the pane substantially the same composition. Of course the composition of the surface portion of the body which is adjacent to the structured surface can differ to the composition of the central portion by a lower concentration of sodium ions which were withdrawn at the toughening or tempering process. Besides such smaller changes of the ion concentration the composition is substantially the same in the inner and in the surface portion of the glass pane. Thus the glass pane forms an integral body with the structured surface.

A solar cell or a solar module having a glass pane as described above provides substantial advantages over known solar cells / modules, because the surface of the glass pane has anti-reflecting characteristics and optimum light transmission is secured. These characteristics are maintained through the complete lifetime of the solar cell / module as the nanostructure is formed in the integral body of the glass pane. Further advantages are achieved if the surface, particularly the structured surface is toughened or tempered, because then the sodium ion concentration is reduced which causes a reduced danger of deterioration of the light transmission and reduces the migration of sodium ions from the glass to other elements of the solar cell / module.

The invention is explained in more detail by means of the accompanying drawings. In the drawings it is shown in:
Fig. 1 a production site for producing flat glass in a simplified illustration,

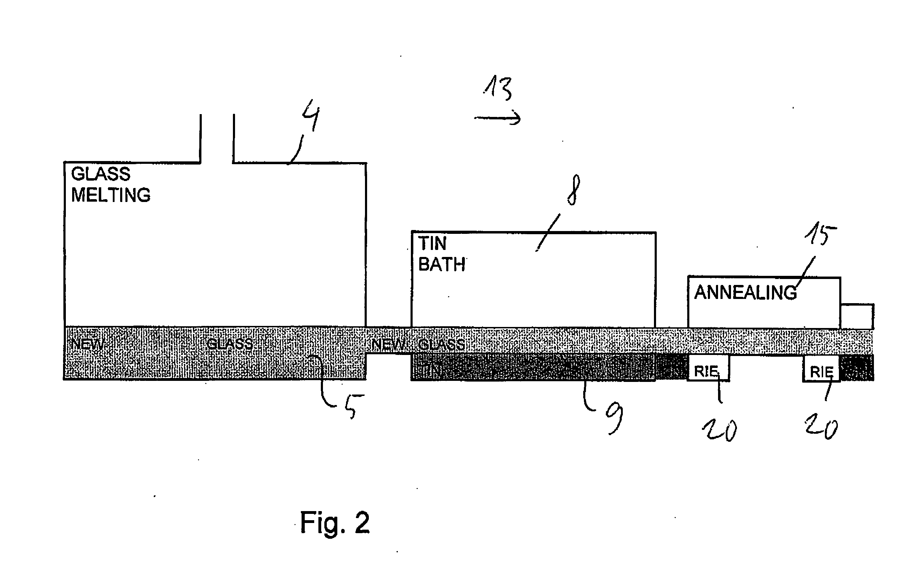

Fig. 2 schematically the flat glass production with a deposition unit for depositing glass nano particles onto a glass ribbon, and
Fig. 3a and 3b a portion of glass pane with a micro- or nanostructure in a cross sectional view with an optimal (Fig. 3a) and a realistic (Fig. 3b) structure.

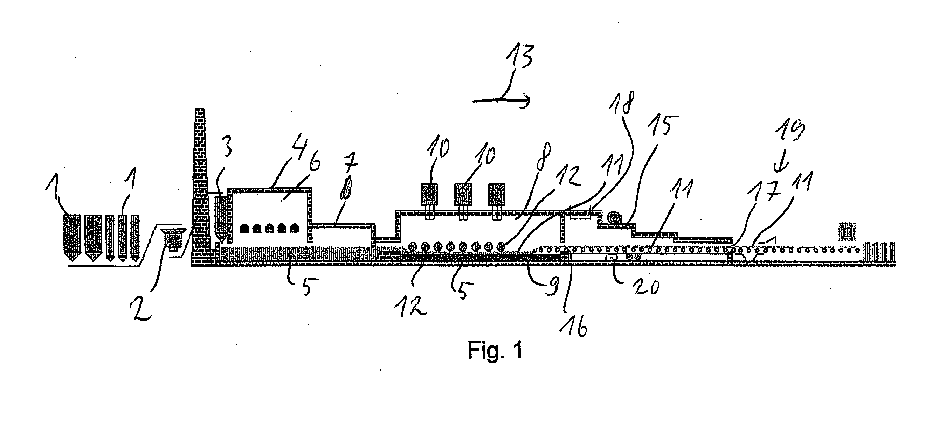

Fig. 1 shows in a simplified illustration a prodution site for producing flat glass which is suitable for carrying out the present invention. The production site comprises containers 1 for storing raw material for the glass production. The raw material is mixed to a batch and collected in a batch container 2. From the batch container 2 the batch is conveyed to a charging silo 3 for charging a glass furnace 4 with the batch. The furnace is heated to a temperature above 1200°C for melting the batch to molten glass 5. Preferably, the molten glass is a soda lime glass. Then the temperature of the furnace 4 is adjusted to at least 1500°C.

The molten glass 5 flows from a melting chamber 6 in the furnace to a discharge chamber 7 and from the discharge chamber 7 of the glass furnace 4 into a tin bath chamber 8. The tin bath chamber 8 comprises a bath with molten tin or with a molten tin alloy 9. The tin bath chamber 8 comprises heating elements 10 for providing a certain temperature profile.

A ribbon of molten glass 5 is floating on the molten tin 9, wherein the ribbon of glass is formed on the molten tin to a flat and smooth float glass which is a certain kind of flat glass 11. In the tin bath chamber 8 rollers 12 are provided which are in contact with the upper surface of the flat glass 11. The rollers 12 are driven for moving the flat glass in a transportation direction 13. At the end of the tin bath chamber 8 the flat glass 11 is picked up by conveyer mechanism which usually comprises a plurality of rollers 14. By means of this conveyor mechanism the flat glass 11 is transported through an annealing lehr 15. The annealing lehr 15 comprises an entrance 16 through which the flat glass 11 enters the annealing lehr 15 and an exit 17 through which the flat glass 11 leaves the annealing lehr 15. The annealing lehr 15 comprises a heating element 18 which provides a temperature profile which varies in transportation direction 13. At the entrance 16 the temperature is about 600°C, wherein at the exit 17 the temperature is reduced to about 200°C. At the exit the flat glass 11 is cooled down to a temperature of about 200°C. The flat glass 11 is then conveyed to a cutting line 19 in which the ribbon of the flat glass 11 is cut in separate glass panes. Further processing stations for bending, grinding, drilling, tempering and toughening can follow.

In the process between the end of the forming process and the end of the annealing lehr 15 an deposition unit 20 is provided beneath a transportion path of the flat glass 11.

The deposition unit 20 of the present embodiment comprises a blower for blowing air, a heater for heating the air and a spraying mechanism for spraying liquid glass into the heated air. The air stream is directed to the surface of the flat glass 11. The deposition unit can be placed below or above the flat glass 11.

The hot air stream comprises small nano particles with a size of about 10 nm to 100 nm in diameter. These nano particles are fused to the hot surface of the glass ribbon as the melting temperature of such glass nano particles is significantly lower than the melting temperature of bulk glass. The fusion can be further supported by a chemical reaction between the glass nano particles and the glass ribbon.

The preferred glass composition is a soda lime glass.

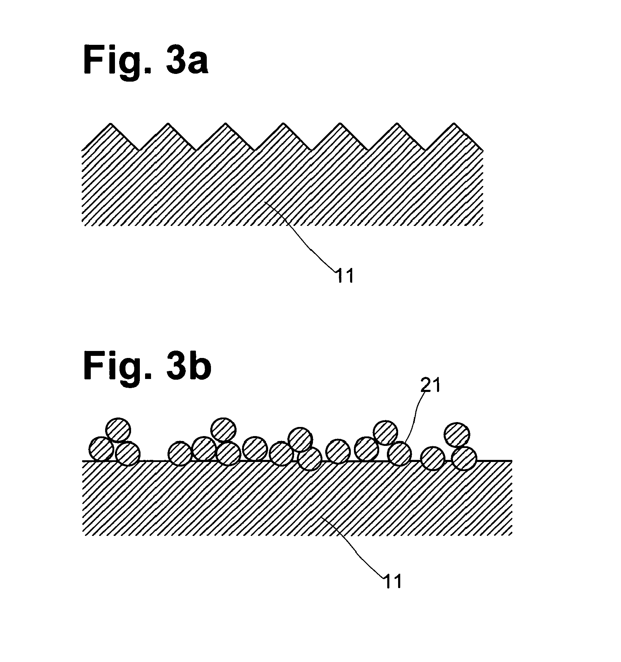

The optimum surface structure would have triangular trenches with a depth of about 300 nanometer and a width of about 100 nm (Fig. 3a). This would provide perfect anti-reflection properties. Due to the random distribution of the glass nano particles in the air stream bumps are produced with the same random distribution. Due to the nanostructured surface such produced glass panes have good antireflection properties.

As the deposition of the nano particles is done in-line of the production process of flat glass the temperature of the flat glass before or in the annealing lehr 15 or directly after the annealing lehr 15 is used for enhancing the fusion of the nano particles onto the surface of the glass ribbon. The optimum temperature can be selected by placing the deposition unit 20 at the position of the transportation path where the optimum temperature is set by the temperature profile of the process line, in particular of the annealing lehr.

In the above described example of the invention the flat glass is a float glass which is produced by means of floating on a tin bath. The present invention can also be used in the production of other types of flat glass including rolled glass, patterned glass, drawn glass, and figured glass. For example the glass melt can be formed by rollers to a glass ribbon to which the glass nano particles are fused. Independently of the type of production method for producing the flat glass the deposition of the glass nano particles is preferably carried out onto the hot glass ribbon in the production line.

In the above described production process only to one side of the glass ribbon nano particles are deposited. However, if appropriate to both sides of the glass ribbon glass nano particles can be deposited to form on both sides a micro- or nanostructured surface.

Furthermore, the flat glass can be subjected to a toughening by a chemical process or by heating and cooling the flat glass. The chemical toughening process can also be carried out before, in or after the annealing lehr 15. Preferably, the chemical toughening is carried out before the deposition of the glass nano particles, so that the nano particles are deposited on a surface of the glass ribbon which has an increased potassium concentration. This enhances the fusion between the glass nano particles and the glass ribbon.

The following documents disclose aspects and methods for chemically toughening which can be applied for the present production process of flat glass:
- H. Yunqiu et al., "Mechanical strength improvement of glass by ion exchange in the solid state" Journal of Non-Cristalline Solids 80 (1986) 283-291, North-Holland, Amsterdam,
- K.K. Mallick et al., "Strengthening of container glasses by ion-exchange dip coating", Journal of non-crystalline solids 351 (2005) 2524-2536;
- J. Shen et al.; "Effect of the K/Na ratio in mixed-alkali lime silicate glasses on the rheological and physical properties", Journal of Non-Crystalline Solids 344 (2004) 66-72
- K. Kamada et al.; "Crack-free lithium ion injection into alkali silicate glass using Li+ conduction microelectrodes", Solid state ionics 176 (2005) 1073-1078;
- B. Samuneva et al.; "Interaction between glasses and alkali metal vapours", Journal of non-cristalline solids 112 (1989) 385-391 North-Holland, Amsterdam.

In the present invention one or more of these chemicals are used to achieve chemical toughening of the flat glass during the manufacturing process while the glass is still in ribbon form.

The flat glass produced according to the present invention is particularly suitable as substrate or a cover plate or a base plate for solar cells. Solar cells using such a substrate or cover plate or base plate can achieve a longer lifetime, a higher efficiency due to the self cleaning characteristics and the anti reflection properties.

The flat glass produced according to the above described procedure is made with a thickness of 3.2 mm. It is intended to reduce the thickness to between 2.0 to 2.4 mm while achieving the same or better mechanical properties as available from the thicker glass.

### List of references

- 1: container
- 2: batch container
- 3: charging silo
- 4: glass furnace
- 5: molten glass
- 6: melting chamber
- 7: discharge chamber
- 8: tin bath chamber
- 9: molten tin/molten tin alloy
- 10: heating elements
- 11: flat glass
- 12: roller
- 13: transportation direction
- 14: roller
- 15: annealing lehr
- 16: entrance
- 17: exit
- 18: heating element
- 19: cutting line
- 20: deposition unit
- 21: recess

## Claims

1. Method for producing flatglass comprising the steps of:
- melting a glass composition to form a glass melt,
- forming the glass melt to flat glass in form of a glass ribbon,
- conveying the flat glass into an annealing chamber for annealing the flat glass,
wherein before or during or directly after said annealing nano particles are fused to the hot surface of the glass ribbon.

2. Method according to claim 1,
wherein during the deposition of the glass nano particles on the glass ribbon the temperature of the glass ribbon is between 400 °C and 50 °C above the glass transition temperature.

3. Method according to claim 1 or 2,
wherein the glass nano particles are transported to the glass ribbon by means of a, preferably temperature controlled, stream of air or inert gas.

4. Method according one of the claims 1 to 3,
wherein the glass ribbon is formed either by pouring the glass melt on a bath of molten tin or by rolling the glass melt.

5. Method according to any one of the claims 1 to 4,
wherein the flat glass (11) is made of soda lime glass.

6. Method according to one of the claims 1 to 5,
wherein the surface of the flat glass (11) is at least once toughened, wherein the toughening is preferably carried out before the deposition of the glass nano particles.

7. Method according to one of the claims 1 to 6,
wherein the flat glass is toughened by a chemical process or thermally tempered.

8. Glass pane, wherein
the glass pane is made of flat glass and has a nanostructured surface wherein the nanostructured surface is fused to the bulk glass pane which has a substantially uniform composition.

9. Glass pane according to claim 8,
wherein the nanostructured surface comprises structures with a depth of 50 nm to 400 nm and preferably 100 nm to 300 nm.

10. Glass pane according to claim 8 or 9,
wherein the structures are randomly distributed over the whole surface of the glass pane.

11. Glass pane according to any one of the claims 8 to 10,
wherein the glass pane is produced by the method according to one of the claims 1 to 7.

12. Solar module having a glass pane, wherein the glass pane is embodied according to one of the claims 8 to 11 and the nanostructured surface forms the surface for incidence of light of the solar module.
